# EUROPEAN PATENT APPLICATION

(11) **EP 1 764 614 A1**
(43) Date of publication of application: **21.03.2007**
(21) Application number: 06254719.5
(22) Date of filing: 11.09.2006
(51) Int. Cl.: G01N 29/26, G01N 29/24, G01N 29/06, G10K 11/34, B06B 1/06, A61B 8/12, G01S 15/89

(54) **Uni-index variable angle ultrasonic phased array probe**

(30) Priority: 15.09.2005 US 227395
(71) Applicant: General Electric Company, Schenectady, NY 12345 (US)
(72) Inventor: Carodiskey, Thomas J., McVey Town, PA 17051 (US)
(74) Representative: Bedford, Grant Richard

(57) **Abstract**

An ultrasonic probe (2) used for inspecting a workpiece (44) comprising a delay body (8) and a transducer array (4) having a plurality of transducer elements (6) mounted on the delay body (8). The plurality of transducer elements (6) of the transducer array (4) are mounted on the curved outer surface of the delay body (8). The transducer elements (6) in the array of elements are equidistant from a center of the radius of curvature (14) of the delay body (8), so that sound waves simultaneously generated by two or more of the transducer elements (6) arrive at the center of the radius, also referred to as the origin point (16), at the same time. The reflected sound passing through the index point received by a transducer in the array (4) is not subject to a time delay resulting from the geometry of the delay body (8).

## Description

The present invention is directed to an ultrasonic probe in the form of a transducer array, and specifically an ultrasonic probe having a probe body with a geometric shape such that transducers in the transducer array are equidistant from an origin point in the probe body so that sound waves generated simultaneously by two or more transducers in the array arrive simultaneously at the origin point.

Ultrasonic probes are used for inspection of work pieces in industrial applications. The inspections have been conducted by contact methods, wherein the probe is brought into intimate contact with the workpiece, but coupled to the workpiece using a couplant such as glycerin or oil, or by noncontact or submersion methods, in which a column of water lies between the workpiece and the transducer.

The probe is comprised of a delay body and at least one transducer mounted on the delay body. The at least one transducer typically is a piezoelectric material which is excited by an electrical signal to produce a mechanical vibration, or is excited by a mechanical vibration to produce an electrical signal. The transducer is connected to a signal generator and to a signal analyzer so that electrical signals can be used to excite the transducer and so that mechanical vibrations received by the transducer can be analyzed. The transducer comprise a plurality of transducer crystals arranged as a transducer array. The signal processing equipment, including the apparatus for generating electrical signals and the signal analysis equipment, including associated software and algorithms, can be quite complex. The delay body to which the transducer or transducer array is attached is intermediate the workpiece and the piezoelectric material. It typically has the form of a disk or a wedge, and the sound generated or received by the transducer must pass through the delay body.

Because of the shape of the delay body, sound generated or received by the transducer or transducers in the array pass through unequal amounts of material in the delay body, resulting in a timing delay for the signal. While this time delay can be accounted for in the analysis, it leads to complications that slow the analysis and which add to the potential for errors.

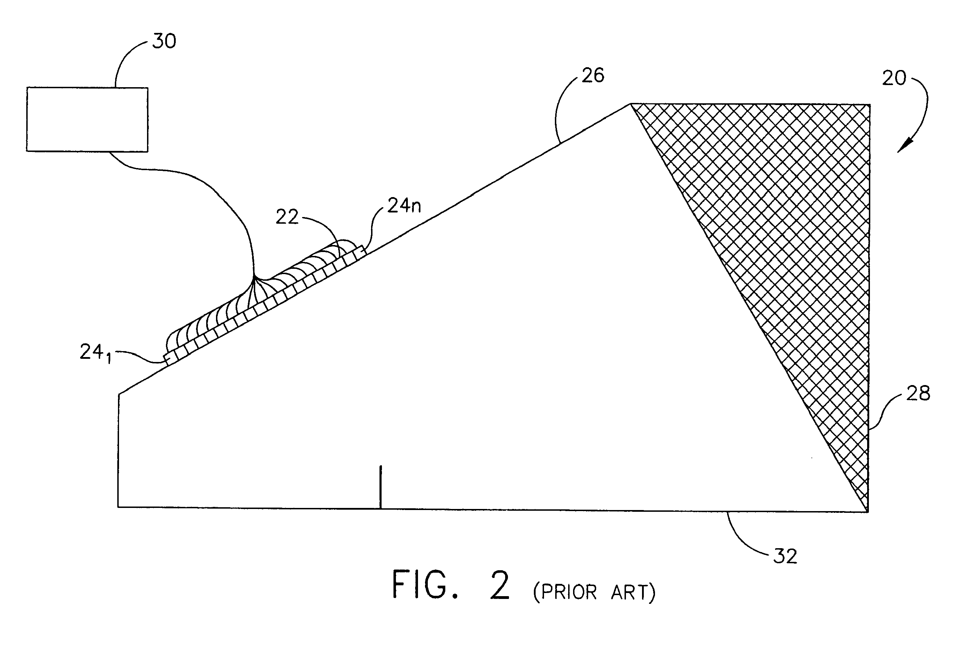

Various approaches have been used to improve the focusing of sound waves in objects. One approach for medical echography is set forth in U.S. Patent No. 5,027,820 ('820 patent). This approach utilizes a phased array positioned on a cylindrical generatrix. More specifically, the phased array is positioned on a convex surface and focuses the beam in a direction D away from this convex surface to a focusing point Fj a way from the convex surface. The transducer arrays are not equidistant from the focal point as is evident from Figure 2 of the '820 patent. As a result, focusing can be achieved electronically, but not mechanically.

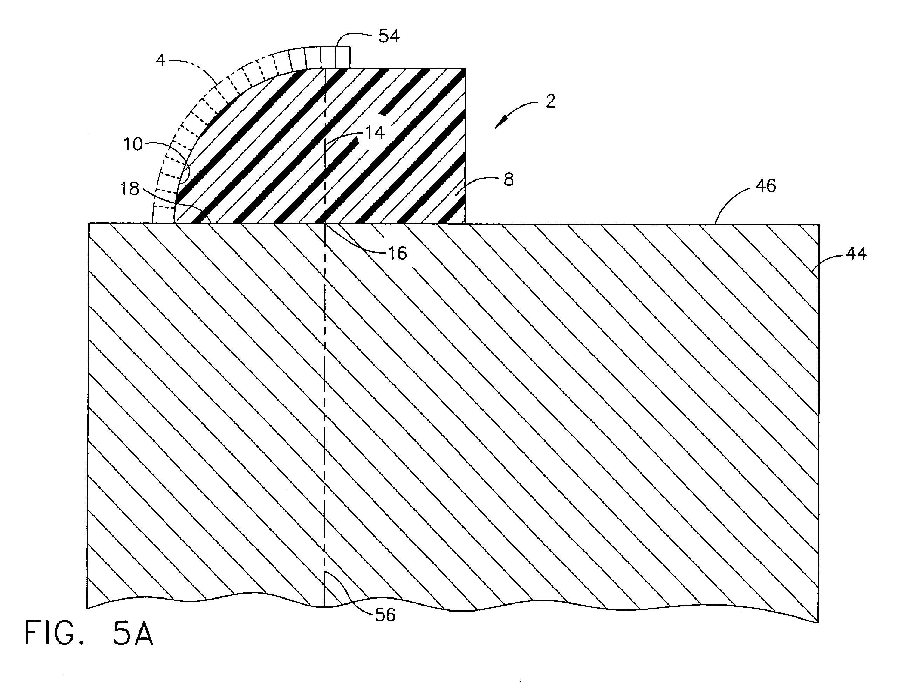

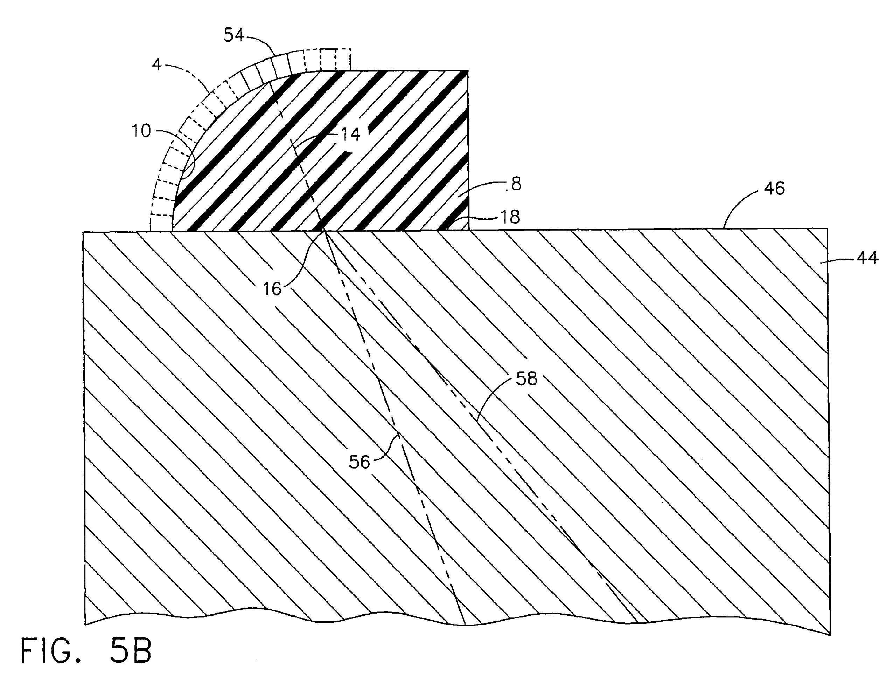

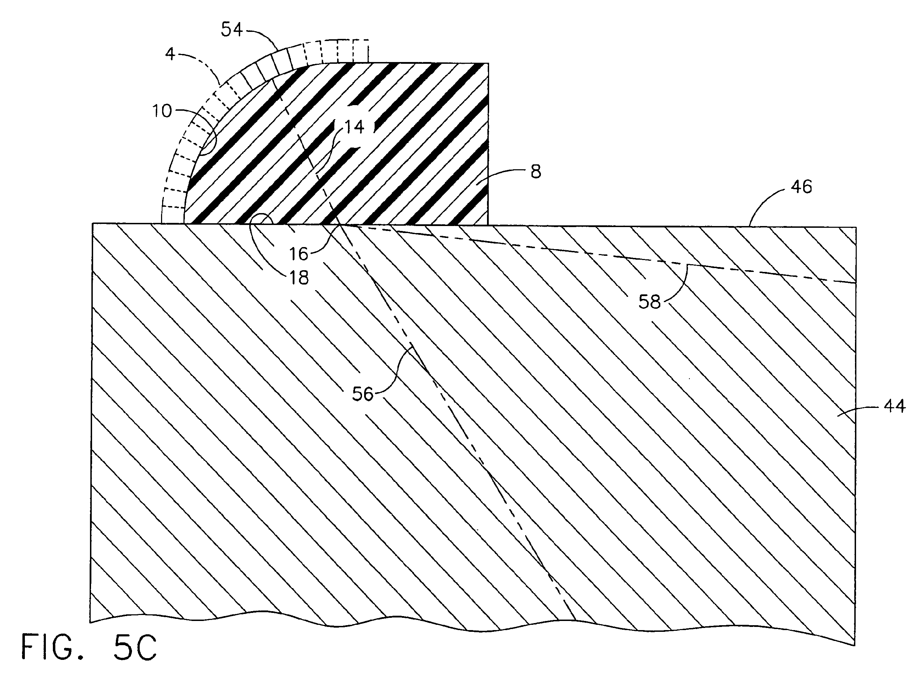

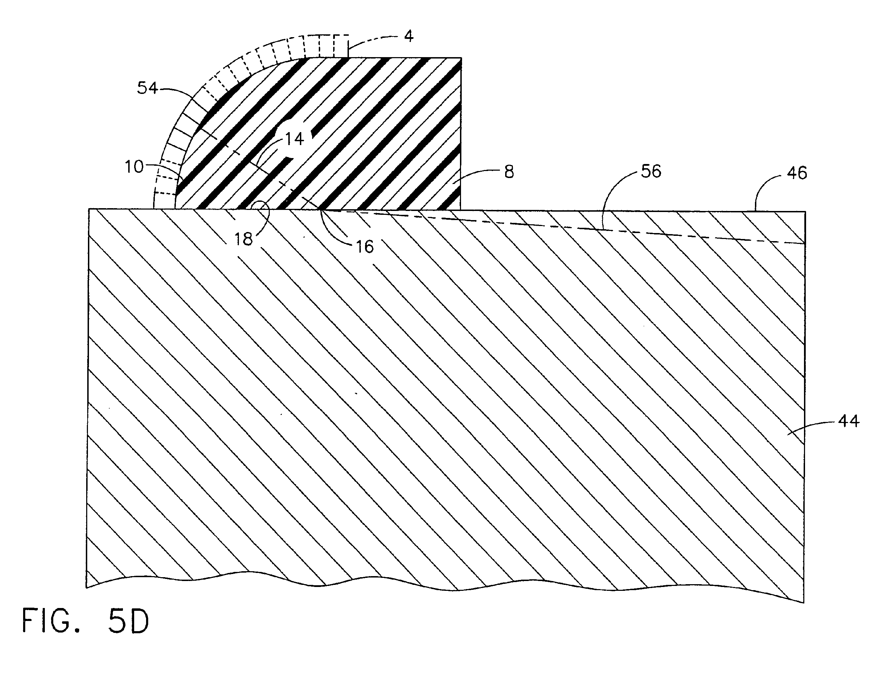

U.S. Patent No. 5,148,810 ('810 patent) discloses generating a spherical wavefront from a substantially linear transducer array. Although no delay body is disclosed, transducers are mounted on array bodies. In an arrangement such as disclosed in the '810 patent, such as is shown in Figure 5, while the spherical wavefronts generated are equidistant from a centerline bisecting the transducer array, any focal point generated along the centerline is not equidistant from each transducer array, so that a time delay would be inherent in the delay body.

What is lacking in the art is an ultrasonic probe that utilizes a combination of a transducer and delay body that generates a wave that is focused to a point, the focus point being equidistant from a geometric center of the transducer or each transducer in a transducer array. Such a focal point may be in the delay body, or it may be outside the delay body in the workpiece to be inspected. However, any sound wave reaching the focal point from the transducers in the array arrives at substantially the same time, thereby allowing potential errors in measurement to be eliminated, or alternatively, allowing for elimination of corrections to measurements due to time delays. Conversely, sound reflected from the work piece and arriving at the focal point would reacheach transducer in the array at the same time. Thus, echos such as from back surfaces and imperfections could be more readily determined.

According to one aspect, the present invention provides an ultrasonic probe used for inspecting a workpiece. The probe is particularly useful for inspecting work pieces that are articles of manufacture having at least one surface having a geometry that can be coupled to the workpiece. The probe comprises a transducer array having a plurality of transducer elements. The transducer elements are connected to an ultrasound device that can generate sound across a range of preselected frequencies and that can analyze received sound across a range of preselected frequencies. The transducer elements are connected to the ultrasound device by well-known techniques, allowing each element to produce sound waves at ultrasonic frequencies when excited by the ultrasonic device. The transducer elements also receive sound and communicate the sound to the ultrasonic device, where it can be appropriately analyzed and displayed.

The probe also includes a delay body. The delay body is a solid material having a matrix characterized by its ability to transmit a sound wave with little or no attenuation. A portion of the delay body is characterized by a geometry in the shape of a spherical wedge with a curved outer surface. The curved outer surface is defined in terms of a radius, each point on the curved outer surface being spaced from the center or origin point by a constant distance, the distance of each point on the curved outer surface being the radius of the outer surface curve.

The plurality of transducer elements of the transducer array are mounted on the curved outer surface of the delay body. Because each of the transducer elements in the array of elements is equidistant from the center of the radius of curvature of the curved outer surface, sound waves simultaneously generated by two or more of the transducer elements arrive at the center of the radius, also referred to as the origin point, at the same time. For any delay body, there is a single origin point, since a curved body of constant radius can have but a single center.

An index point is related to the origin point. The index point can be any preselected point selected from a group of positions consisting of a position on an interface formed by the delay body and the workpiece. The index point can also be any preselected point within the workpiece. In this circumstance the index point is a preselected calculable distance from the origin point within the workpiece.

When the index point is located on the interface formed by the delay body and the workpiece, the index point corresponds to the origin point. In this circumstance, the group of positions can be selected by moving the delay body and the origin point is arrived at by simultaneously firing the elements

When the index point is located within the workpiece, the index point is a preselected distance from the origin point. The index point is arrived at by a more complicated method. The index point is moved into the workpiece by sequentially firing preselected transducer elements in the array with a preselected time delay. By firing the elements, a pattern is formed which in turn generates a sound wave that converges to the index point within the workpiece. The index point is a preselected distance from the origin point, which can be determined by a mathematical algorithm that calculates the origin point based on location of the preselected transducer elements within the array, firing sequence and time delay. By carefully controlling each of these elements, it is possible to sequentially move the index point through the workpiece without moving the delay body.

Regardless of whether the index point corresponds to the origin point, or whether the index point is located within the workpiece at a predetermined distance from the workpiece, the location of any imperfections within the workpiece can more readily be determined, as the index point either corresponds to the origin point or is located at a preselected distance from the origin point. It should be clear that the distance from any of the transducer arrays to the index point is the same, so that the time delay from the index point to the any of the elements is the same. Any reflection from an imperfection within the workpiece to the index point will depend on the distance of the imperfection from the index point. Now, the calculation of the position of the imperfection is simplified. Also, by mapping the reflection received by each element of the array, the size of the imperfection can be determined and mapped, and a determination of its acceptability can be made.

As used herein, the term "sound wave" refers to any wave having a frequency of about 0.25 MHz to about 35 MHz, and the term "sound is used interchangeably with the term "ultrasound" or "ultrasonic." The term "transducer" means any device capable of producing or receiving sound waves. Although transducers include piezoelectric materials that convert electrical impulses into sound waves, and sound waves into electrical impulses, piezoelectric materials are merely preferred transducers, as the term is not limited to such preferred embodiments. The term "firing a transducer element" means activating a transducer element by providing it with a stimulus, causing the element to vibrate for a brief period of time, thereby generating a sound wave or ultrasonic pulse. A piezoelectric element is stimulated with an electrical pulse.

Another advantage of various embodiments of the present invention is that the calculations can be performed more quickly and more reliably. Additionally, the ultrasonic testing of a volume of the material can be performed without moving the probe, but by simply implementing a program that fires preselected elements of the array in a prearranged sequence and in a prearranged timing pattern so as to scan the volume. Rather than having to move the probe across the entire surface of the workpiece, a thorough scan of the workpiece can be accomplished by simply moving the probe linearly, along a single dimension, rather than in a planar fashion, along a surface of the test piece.

Still another advantage of various embodiments of the present invention is that an accurate scan of the workpiece can be achieved when the workpiece is a complex shape. With such work pieces, an accurate scan can be achieved when only one surface is suitable for interfacing with the probe. Indeed, depending upon the configuration of the workpiece, an accurate scan may be achieved when only a portion of a surface is suitable. Of course, other factors will enter into such testing, such as filtering back reflections and reflections from indications, but full volumetric testing using ultrasonics which previously were precluded by the complex shape of the workpiece may now be possible.

Other features and advantages of various embodiments of the present invention will be apparent from the following more detailed description of the preferred embodiment, taken in conjunction with the accompanying drawings which illustrate, by way of example, the principles of the invention, and in which:
Figure 1 is a cross-sectional view of the probe of an embodiment of the present invention.
Figure 2 is a cross-sectional view of a prior art probe.
Figure 3 is a cross-sectional view of sound waves propagated through a prior art probe at two different angles.
Figure 4 is a cross-sectional view of a prior art probe interrogating a workpiece at four preselected angles.
Figure 5 is a cross-sectional view of the probe of an embodiment of the present invention interrogating a workpiece at four preselected angles.
Figure 6 is a perspective view of a cylindrical section of a probe of an embodiment of the present invention.
Figure 7 is a cross-sectional view of the probe of an embodiment of the present invention depicting interrogations at different index points within the workpiece.

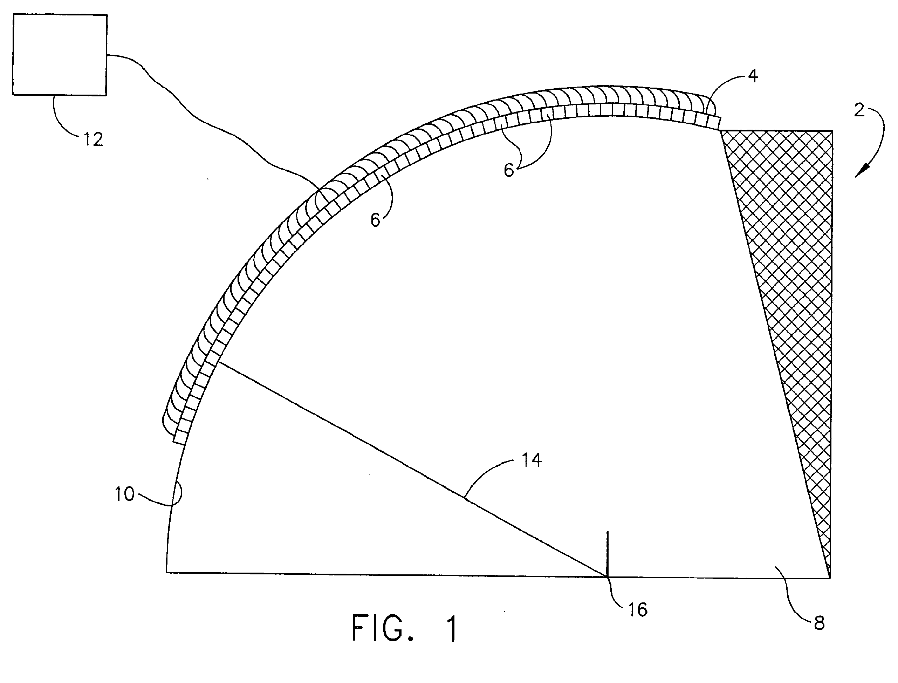

The ultrasonic probe of various embodiments of the present invention utilize a delay body of having a convex outer surface, the convex outer surface having a constant radius. This probe is depicted in Figure 1. The probe 2 includes a transducer array 4 comprising a plurality of array elements 6₁₋ₙ where n can be any integer. The array elements 6 are mounted on the convex outer surface 10 of the delay body 8. The delay body may be any solid material as is known in the art. Typically, delay bodies are constructed of plexiglass, polystyrene or other polymeric materials. Each transducer array element 6 in the transducer array 4 is connected to a generator 12 that provides an electrical signal which is converted by the element into a mechanical sound wave of preselected frequency as is well-known in the art. Sound waves produced by each of the transducer array elements 6 are transmitted through the delay body 8 substantially along the radius 14 from the location of the element 6ₓ to the center 16 of the radius 14, also referred to as the origin point. In Figure 1, the center of the radius, the origin and the index point all coincide. As the distance from any point along the convex outer surface 10 of the delay body 8 to the origin point 16 is a constant value r, sound waves of a preselected frequency generated by the array elements 6 mounted on the delay body 8 travel the same distance r to the origin point 16, so sound waves generated at the same time arrive at the origin point 16 or index point at the same time.

Figure 2 depicts a prior art probe 20. The prior art probe 20 includes a transducer array 22 comprising a plurality of array elements 24. The plurality of array elements 24 is mounted on a face 26 of a wedge-shaped delay body 28. Each of the elements 24 of the transducer array is connected to a generator that provides an electrical signal which is converted by each element into a mechanical sound wave of preselected frequency as is well-known in the art. Sound waves produced by each of the transducer array elements 24 are transmitted through the wedge-shaped delay body 28 to a second face 32 opposite face 26. Typically, the second face is placed into contact with a workpiece (not shown in Figure 2). As can be seen in Figure 2, the distance traveled by sound waves produced by different array elements 24 travels a different distance within the delay body. For example, the distance traveled by a sound wave produced by an element 24₁ within wedge-shaped probe body 28 is less than the distance traveled within the probe body by sound wave produced by element 24ₙ. Thus, each of the sound waves simultaneously generated transducer array 22 by generator 30 arrive at second face 32 at slightly different times due to the fact that they travel different distances within the transducer body. Since the sound waves are utilized to locate and measure imperfections within the workpiece, the calculations for determining location and size of such imperfections are significantly more complicated due to the variations in distance.

It should be noted that the transducer arrays depicted in the Figures are shown in cross-section, but the arrays extend in three dimensions. For example, the transducer array depicted in Figure 2 is planar and not linear. Furthermore, each element in the planar array may be comprised of a single element in a plane perpendicular to the Figure, so that each element of the plurality of elements in the array is sectioned, and a cross-section taken at a different location in the plane perpendicular to the Figure would result in a sectioning the same elements at a different location. Alternatively, the array may extend in the plane perpendicular to the Figure so that a cross-section taken at a different location in the plane perpendicular to the Figure would result in the sectioning of different elements. The transducer array of Figure 1 is analogous, but is slightly more complicated as it is curvilinear in cross-section rather than linear.

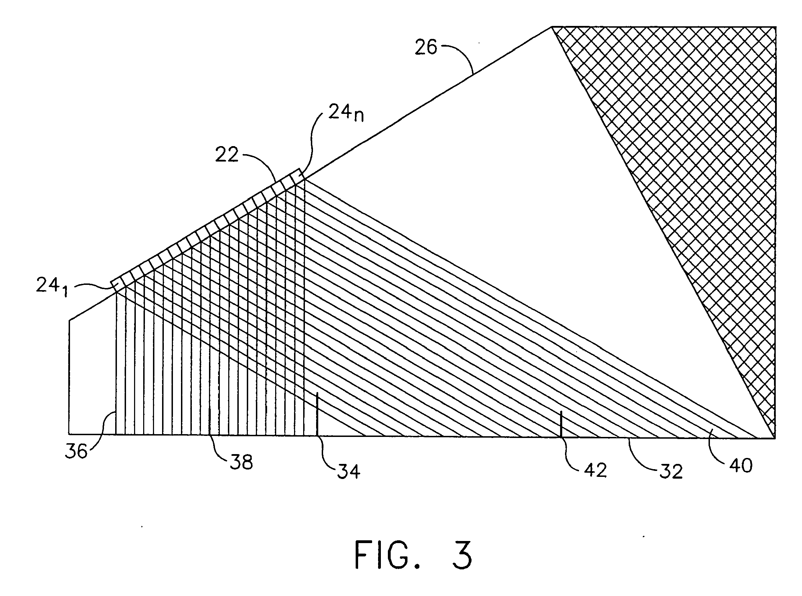

Figure 3 illustrates two sound waves generated by the prior art transducer. This illustration is shown in cross-section. A first index point 34 is shown on second face 32. This index point 34 corresponds to a center point of a first sound wave generated by array 22 at second face 32, the first sound wave being normal to face 26. Only the first index point of the first sound wave is shown for simplicity. A second sound wave 36 is also shown. A second index point 38 is shown on second face 32 and corresponds to the center point of the second sound wave 36 at the second face 32. Second sound wave 36 is generated so as to be normal to second face 32. A third sound wave 40 is shown having a third index point 42 on second face 32, third index point 42 corresponding to the center point of the third sound wave 40 at the second face 32. Sound waves propagated at varying angles are produced by firing the plurality of array elements 24 of transducer array 22 at slightly different times in a preselected sequence to produce a wave front of predetermined angle. Figure 3 clearly illustrates that sound waves generated by prior art transducers have index points that vary as the angle varies. Each index point represents the center point of the wave at a predetermined angle. The distance from each element of the array to a point on second face 32 varies with the predetermined angle. Since inspecting a workpiece requires determining the location and size of an imperfection, and the location is determined by precise measurements of time of flight of a sound wave, the differences in the distance of the array elements from points on second face 32 at various predetermined angles complicates the calculations of the location and size of the imperfection.

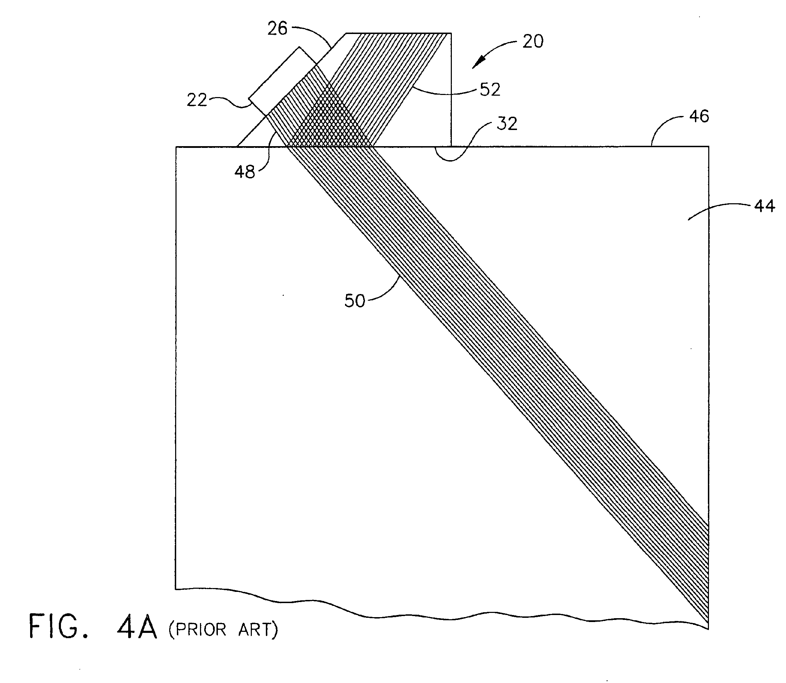

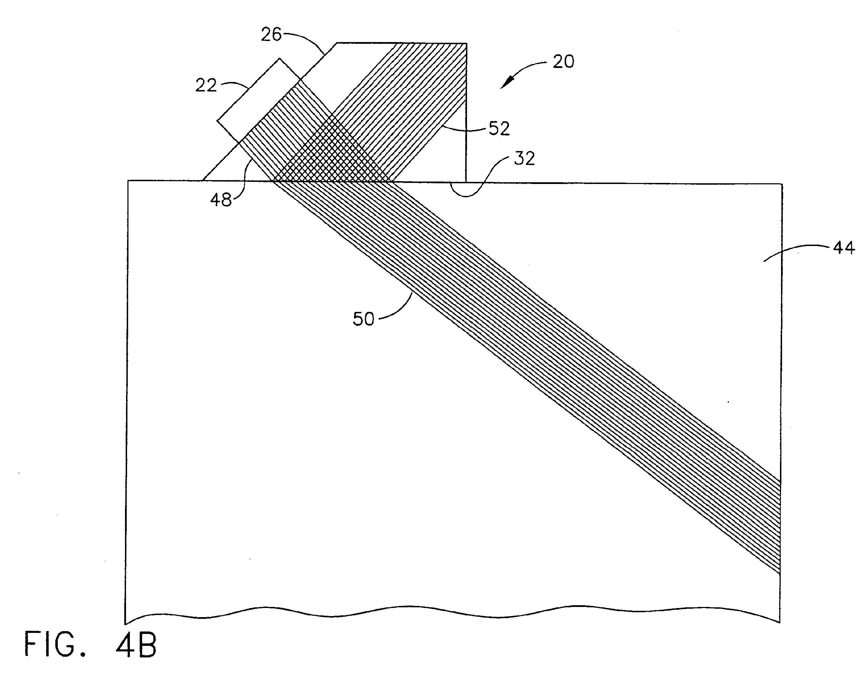

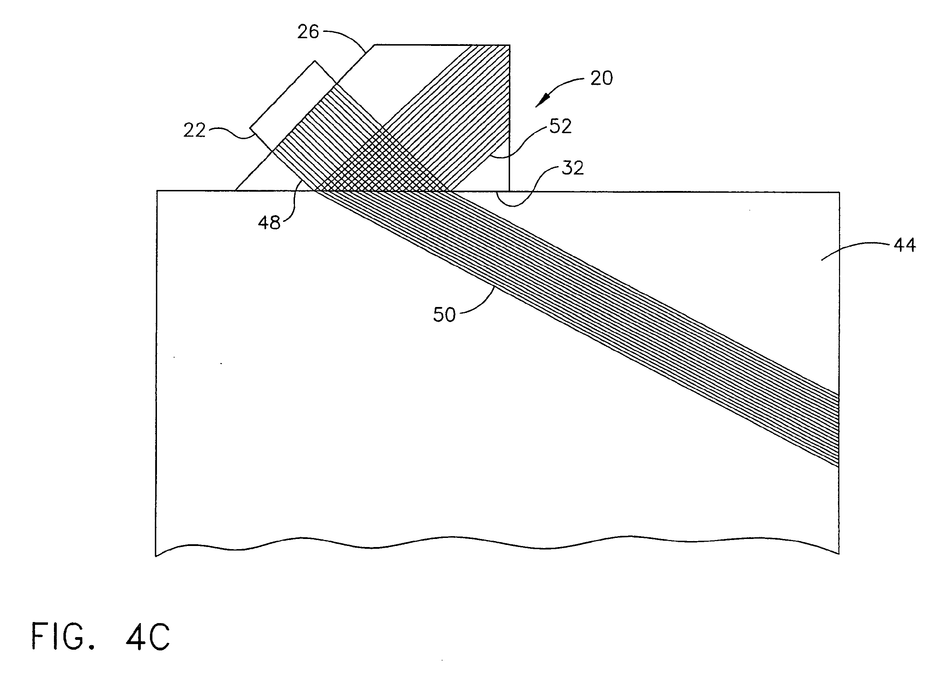

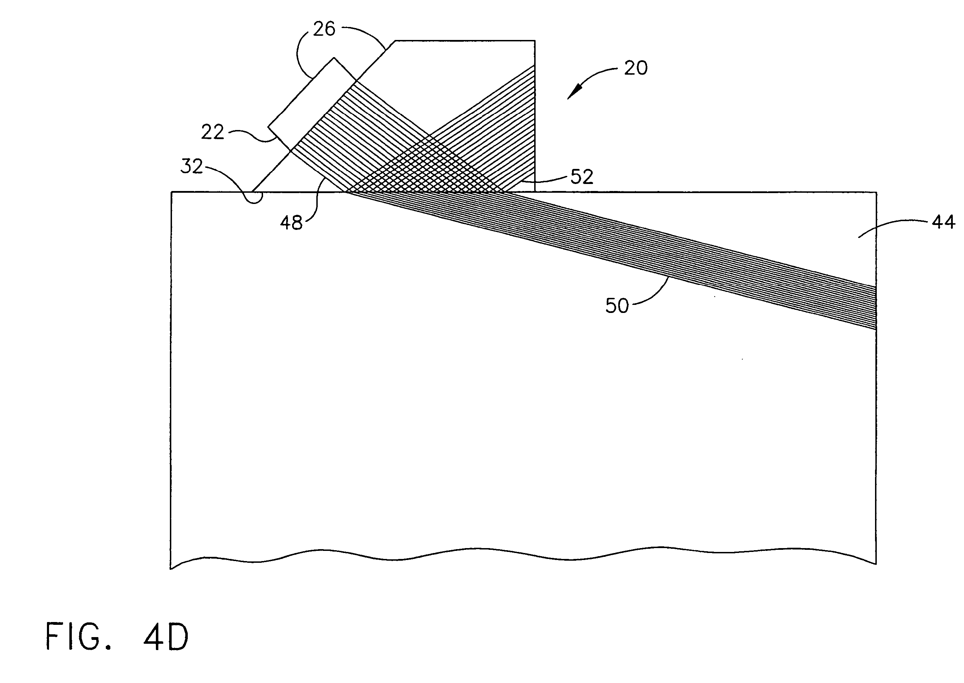

To further illustrate, Figure 4 depicts a prior art probe 20 inspecting or interrogating a workpiece 44 at four different sound wave angles while maintaining the probe 20 at the same location on the workpiece. The sound waves are generated at four different angles, the angles becoming more acute in Figures 4(a) through 4(d) with respect to the interface of second face 32 and surface 46 of workpiece 44. It will be understood that although only four sound waves are shown, the elements of transducer array 22 can be fired in a series of sequences to provide sound waves across a continuous range of angles such that the angle of the sound waves approaches 90 degrees, which is to say the angle of the sound waves approaches the surface 46 of workpiece 44. The sound wave 48 is shown propagating through delay body 28. The reflection 52 of sound wave 48 at the interface of second face 32 and surface 46 of the workpiece is also shown in Figures 4(a-d). The refracted sound wave 52 propagating through the workpiece 44 is also shown, and changes with the angle of the generated sound beam. It is known that sound waves are refracted at interfaces, the index of refraction being a known physical property of the probe-workpiece combination. As clearly demonstrated in Figure 3, the index points of the sound beams in a prior art probe, such as shown in Figure 4, will change as the angle changes. Figure 4 illustrates the problem to be solved with the prior art probe, as the distance the sound wave travels in the probe varies with position of an element in the array as well as the angle of the generated sound wave, which contributes to the difficulty in arriving at a solution for the size and locations of imperfections based on reflected sound waves.

The prior art has been described in great detail in Figures 2 through Figure 4, so that the improvement provided by various embodiments of the present invention will be more readily understood. The probe 2 of Figure 1 is depicted in Figure 5 inspecting or interrogating a workpiece 44 at four different sound wave angles while maintaining the probe 2 at the same location on the workpiece. The sound waves are generated at four different angles, the angles becoming more acute in Figures 5(a) through 5(d) with respect to the interface of second face 18 of probe 2 and surface 46 of workpiece 44. In Figures 5(a-d), the sound waves are generated by firing a portion of the transducer array 4. In each of Figures 5(a-d), the portion 54 of the array fired is depicted by solid lines, while the dashed lines represent the remainder of the array, which remains inactive. Signal filtering techniques to fire only a portion of an array 4 are well known in the art. As is clear in each of Figures 5(a-d), even though the angle of the beam in the workpiece changes by varying the portion 54 of the array (4) fired, the distance that the sound beam travels from the portion of the array fired to the index point 16 is the same. In Figure 5, the index point 16 corresponds to the origin point, which is also the center of the radius of the convex outer surface 10 of the delay body. The distance that the sound wave travels within probe body 8 in Figure 5 is the radius of the probe body, which is constant. In Figure 5, the reflection within the probe body of the generated sound wave from the interface formed where second face 18 of delay body contacts the surface 46 of workpiece 44 is not shown for simplicity, but is present, as is known in the art. In Figure 5(a), 56(a) represents the longitudinal wave and the shear wave transmitted into the workpiece. In Figures 5(b) and 5(c) 56(b) and 56(c) represent the longitudinal wave, while 58(b) and 58(c) represent the shear wave transmitted into the workpiece. In Figure 5(d) only the longitudinal wave 56(d) is present in the workpiece, the angle made by the sound wave with the surface of the workpiece being such that a shear wave cannot be transmitted into the workpiece. As is clear, the angle of the sound wave within the workpiece becomes more acute with respect to the surface 46 of workpiece 44 as the portion 54 of the array activated along the probe surface approaches the surface 46 of workpiece 44. However, regardless of the sequence of activation of the array, the distance that the sound wave travels within the probe body is constant, as contrasted with the prior art probe.

The construction of the array elements may vary. The benefits of various embodiments of the present invention may be achieved with array elements that are manufactured so that the array elements have a radius of curvature that matches the radius of curvature of the delay body. As is clear from Figures 1 and 5, since the delay body 8 has a radius of curvature that is convex, the array elements 6 are preferably manufactured to have a substantially corresponding concave radius of curvature. However, it is not necessary to have array elements that precisely match the curvature of the delay body. In fact, the benefits of the invention can be achieved by approximation. Because a large number of array elements 6 are utilized, each array element 6 being small compared to the radius of curvature, flat array elements can be assembled to the delay body so that the plurality of flat array elements forms a transducer array that closely approximates the radius of curvature of the delay body. Although the elements forming the array may have any configuration, assume that each array element is rectangular in shape having a dimension dx which is small in comparison to the radius of curvature of the delay body. The center of each rectangle is a distance r from the center of curvature of the delay body where r is the radius of curvature. The maximum distance of a point on the corner of the rectangle is from the center of the radius is 0.7dx and the additional distance that this point is from the center of the radius is also small, r*sin 0.7dx. As an example, if an edge of a flat element in the transducer array has a length of 0.1 inch and the radius of curvature of the delay body is 5 inches, the additional distance than a corner of the element is from the center of the radius is about 0.006 inches. Stated another way, the center of the element is 5 inches from the center of the radius, while the edge of the element is 5.006 inches. This difference is only slightly larger than the manufacturing tolerances of delay bodies and transducer elements. Of course, the larger the radius of curvature of the delay body and the smaller the elements, the more closely the transducer array 4 approximates the radius of curvature of the delay body and the smaller the difference is. A similar analysis can be applied to elements of different geometric configuration, but a rectangle is simple to manufacture and simple to understand. Thus, the elements of the array may be either manufactured to match the contour of the probe body. Alternatively, when the array is comprised of a plurality of elements that are small compared to the array radius, the elements are not required to be flat, as is envisioned in one of the preferred embodiments of the invention.

The probe is shown in cross-section in Figures 1 and 4. The transducer array 4 extends along the curvilinear surface of the delay body, which curvilinear surface has a constant radius. This constant radius is required so that the sound waves travel substantially the same distance (subject to the limitations discussed in the preceding paragraph) in the delay body, regardless of the position along the delay body of the element generating the sound wave. The probe also must include a surface which allows the probe to contact the surface of a workpiece, such as surface 46 of workpiece 44 in Figures 1, 4 and 5. Thus, in a preferred embodiment, at least one of the surfaces of delay body 8 is flat, most preferably a face such as second face 18, opposite the transducer array which contacts the surface of a workpiece. For ease of manufacture, it also is preferable that the center of the radius of curvature of the delay body be located on second face 18.

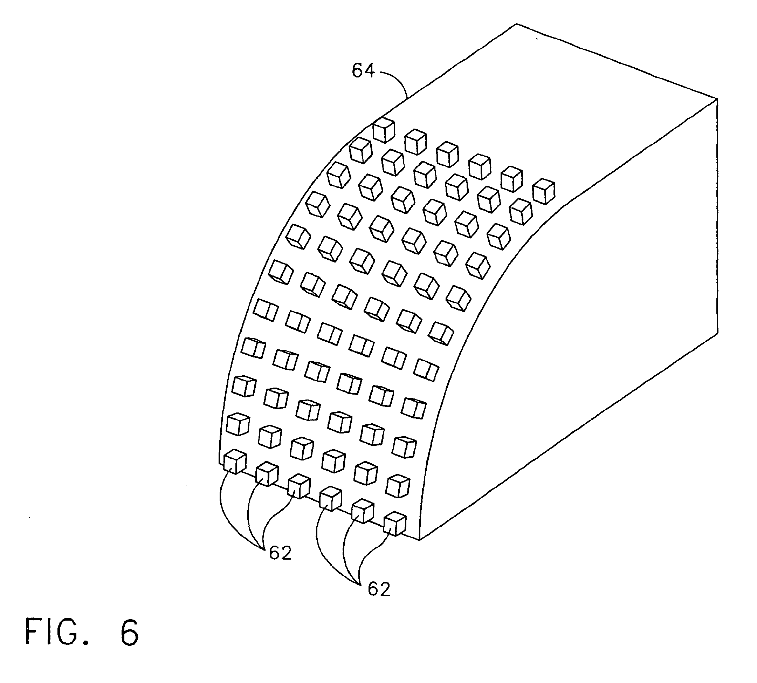

The delay body 8 used in the probe thus may be of any geometric configuration in which a portion of the delay body has a curvilinear surface in which the points on the curvilinear surface are equidistant from an origin point, the distance from the points on the surface to the origin point being a radius of constant distance or length. The curvilinear surface of the delay body forms a convex surface. At least some of the elements of the transducer array are mounted on the curvilinear surface of the delay body equidistant from the origin point. Thus, preferred geometric configurations for the delay body include a hemisphere of preselected radius or a spherical wedge, wherein sides of the wedge extend from the center of the sphere outwardly, while the transducer array is mounted on the outer surface of the sphere. Of course, the delay body may also be some portion of a cylinder, such as a hemicylinder, wherein the cylinder is sectioned along the axis perpendicular to the radial direction. A transducer array is mounted on the outer surface of the cylinder. Each array element mounted along the outer surface substantially in a plane perpendicular to the axis is equidistant from a point along the axis and forms a radial array. This radial array can be made to perform in accordance with the principles of the current information. Of course, a plurality of such radial arrays 62 exist in parallel planes, as shown in Figure 6, forming the array, 64 and each of these radial arrays 62 comprising the array can be fired in predetermined sequence to generate sound waves in accordance with various embodiments of the present invention. While a hemicylinder extends 180 degrees around the axis, the present invention contemplates any portion extending around the cylinder for less than 180 degrees as well, as shown in Figure 6. Thus, the probe body may include 10-degree arc of a cylinder, this 10-degree arc being populated with transducer elements forming to form an array. Each element in an arc along the array is substantially equidistant from a point along the axis, so the radial distance that a sound wave produced by any element along the arc is constant.

In another embodiment of the present invention, the index point is not coincident with the origin point of the center point of the radius as discussed above. This embodiment permits the sound wave to be focused within the interior of the workpiece. Since sound waves generated by elements of the array must reach the index point at the same time in order to be focused, the effective distance traveled by the sound generated by each element of the array is identical. Similarly, the effective distance traveled by reflected sound back to each element of the array also must be identical. Thus even though the index point is not coincident with the origin point, if the sound is focused, the index point can be treated as if it were the origin point. Any sound passing through the origin point will necessarily reach the index point at the simultaneously when the beam is focused. Thus, for calculation purposes, the index point can be determined as the sum of by the radius of the delay body and the distance of the index point from the origin point or radius center. This greatly simplifies the calculations in evaluating reflected signals, as reflected signals travel the same effective distance both to and from the index point. The programs in the associated diagnostic equipment evaluating the reflected signals need only calculate distances from the index point to the imperfection, which can be measured by calculating the differences in time required for the reflected sound wave to travel from the index point to the imperfection and back again, as the time for the sound wave to travel from the index point to and from the transducer will be constant. With the prior art probe, the distance from the transducer elements to the origin point is constantly changing as is the origin point making this calculation extremely difficult to determine, even when possible.

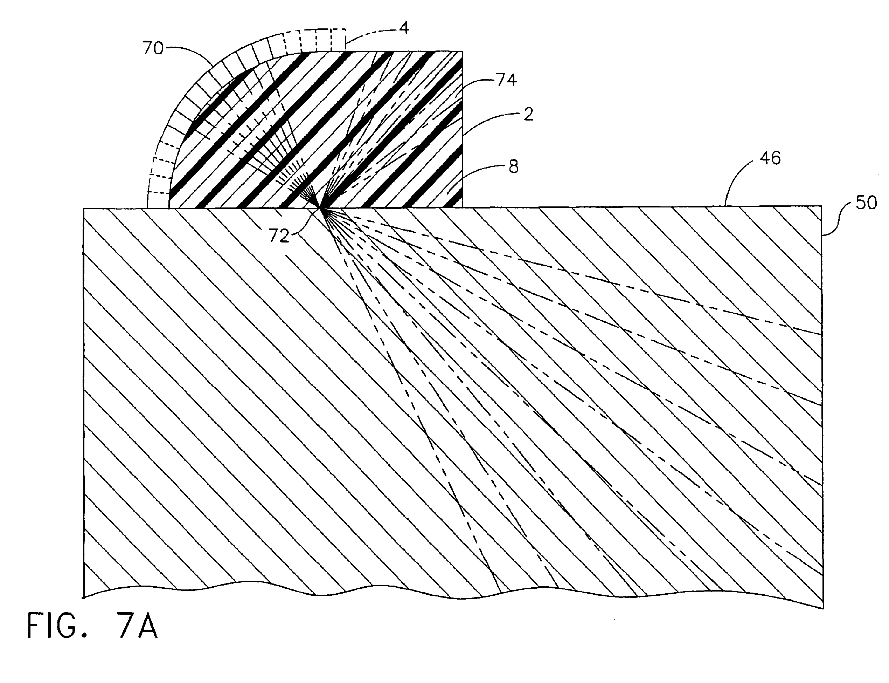

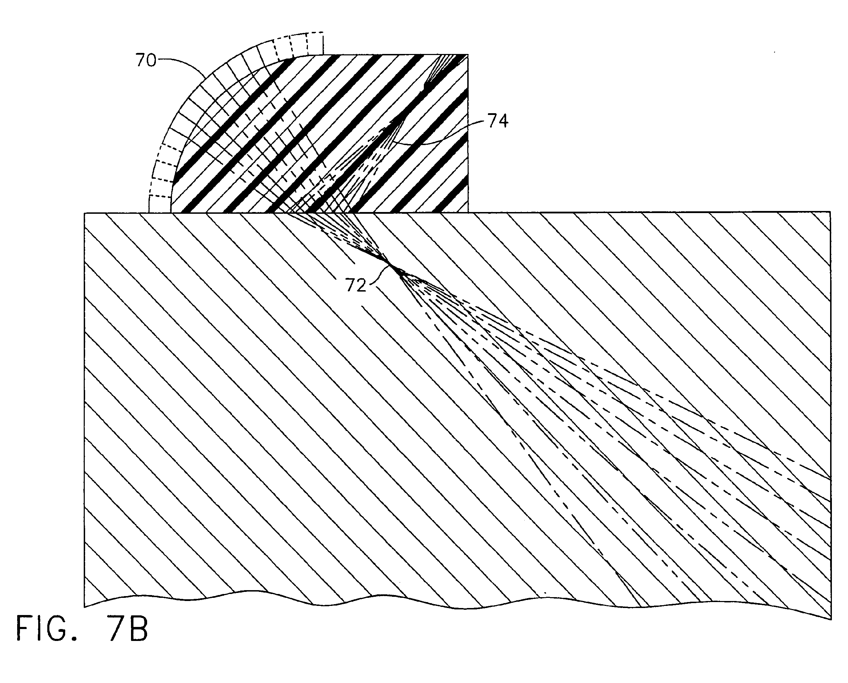

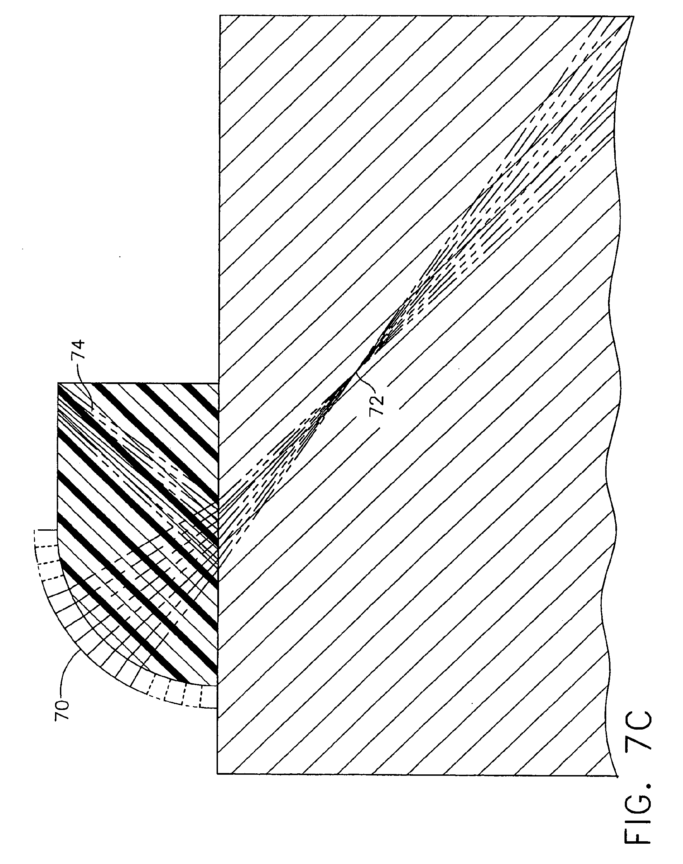

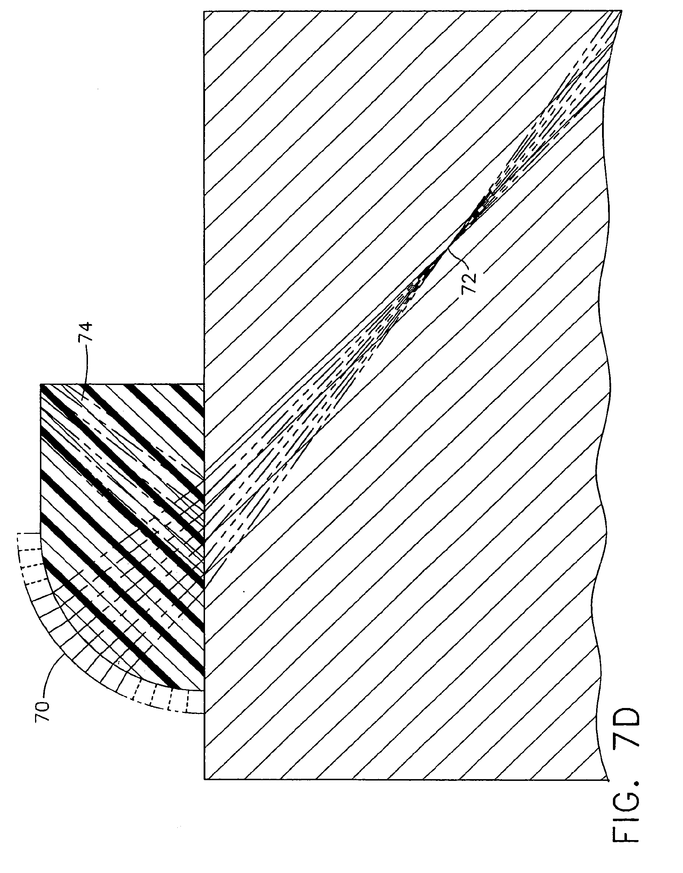

Figure 7 further illustrates this concept. In Figure 7, a segment of transducer elements 70 generate a sound wave. The same segment of transducer elements 70 is fired in Figure (a-d) to illustrate how the index point 72 can be modified by varying the firing of the transducers. The firing of the transducers can be varied by any available technique. The refracted wave 74 is also shown in Figure 7. As can be seen, the index point, and hence the focus of the sound wave, can be varied within the workpiece by varying the firing of the transducer elements within the array.

While the prior discussion relates to changing the focus, it should be apparent that by preselecting the elements that are fired across the transducer array, the angle of the sound wave at a focal point can also be modified. Thus, without moving the probe of an embodiment of the present invention, the workpiece can be scanned by changing the angle of the sound wave (by proper preselection of the sequence of the elements fired) and the focus of the sound wave can be changed (by proper firing of the elements in a preselected sequencing). This can be done rapidly, as the calculations can be computed rapidly because the geometry of the probe simplifies the calculations as discussed above. It is envisioned that the inspection sequence (i.e. the preselection of sequencing of the elements and the firing of the elements in a preselected sequence) can be preprogrammed. The program can be run while moving the probe of various embodiments of the present invention in a single direction along the surface of the workpiece to interrogate the entire workpiece. The results of the interrogation can be stored or viewed on a screen as the test progresses, or both. This is a significant improvement over current methods that require scanning of the entire surface or plane of the workpiece.

While the invention has been described with reference to various preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the preferred mode contemplated for carrying out this invention, but that the invention will include all embodiments falling within the scope of the appended claims.

**PARTS LIST**

| | |
|---|---|
| 2 | Probe |
| 4 | Transducer array |
| 6 | Plurality of array elements |
| 8 | Delay body |
| 10 | Convex outer surface |
| 12 | Generator |
| 14 | Radius |
| 16 | Origin point |
| 18 | Second face of new probe |
| 20 | Prior art probe |
| 22 | Transducer array |
| 24 | Plurality of array elements |
| 26 | Face |
| 28 | Wedge-shaped delay body |
| 30 | Generator |
| 32 | Second face |
| 34 | Index point |
| 36 | Second sound wave |
| 38 | Second index point |
| 40 | Third sound wave |
| 42 | Third index point |
| 44 | Workpiece |
| 46 | Surface of workpiece |
| 48 | Sound wave |
| 50 | Reflected sound wave |
| 52 | refracted sound wave |
| 54 | Segment of transducer elements |
| 56 | Sound wave |
| 58 | Shear wave |
| | |
| 62 | Plurality of radial arrays |
| 64 | array |
| 70 | Segment of transducer elements |
| 72 | Index point |
| | |

## Claims

1. A probe for inspecting a workpiece (44), comprising
a transducer array (4) comprising a plurality of transducer elements (6), each element (6) capable of producing sound waves at ultrasonic frequencies and receiving sound waves at ultrasonic frequencies;
a delay body (8) comprising a solid material, wherein a portion of the delay body (8) has the shape of a spherical wedge with a curved outer surface, each point on the curved outer surface being spaced from an origin point by a constant radius;
the plurality of transducer elements (6) mounted on the curved outer surface of the delay body (8) so that sound waves simultaneously generated by elements (6) of the plurality of elements (6) arrive at a single index point substantially simultaneously, wherein the single index point is related to the origin point (16), and
wherein the single index point is a preselected point selected from a group of positions consisting of a position on an interface formed by the delay body (8) and the workpiece (44) wherein the index point corresponds to the origin point (16), and a position extending within the workpiece (44) wherein the index point is a calculable distance from the origin point (16).

2. The probe of claim 1 wherein transducer elements (6) include a concave surface having a radius of curvature so as to match a radius of curvature of the curved outer surface of the delay body (8).

3. The probe of claim 2 wherein the curved outer surface of the delay body (8) is convex, and the concave surface of the transducer elements (6) matches the convex surface of the delay body (8).

4. The probe of any preceding claim wherein the delay body (8) is a hemisphere having a preselected radius.

5. The probe of any preceding claim wherein the plurality of transducer elements (6) are arranged in a preselected pattern on the curved outer surface of the delay body (8).

6. The probe of claim 5 wherein the preselected pattern is selected to provide changes to an incident angle of the sound wave at the interface of the delay body (8) and the workpiece (44).

7. The probe of claim 6 wherein the curved outer surface of the spherical wedge allows changes to the incident angle of the sound wave without restrictions to a size of the elements (6) of the plurality of transducer elements and frequency of the sound wave.

8. The probe of any preceding claim wherein the delay body (8) has a portion with a cylindrical shape having a curved outer surface.

9. The probe of claim 8 wherein the portion with a cylindrical shape includes an axis of a first preselected length, each point on the curved outer surface being spaced from a point on the axis by a constant, preselected radius perpendicular to the axis.

10. The probe of claim 9 wherein the portion with a cylindrical shape is formed as a solid of revolution by rotating the radius about the axis along each point of the axis through a preselected angle from 0 to 180°.
